# EUROPÄISCHE PATENTSCHRIFT

(11) **EP 1 624 505 B1**
(45) Veröffentlichungstag und Bekanntmachung des Hinweises auf die Patenterteilung: **30.05.2007**
(21) Anmeldenummer: 05014736.2
(22) Anmeldetag: 07.07.2005
(51) Int. Cl.: H01M 2/10, B60R 3/00

(54) **Nutzfahrzeug, insbesondere Lastkraftwagen**
Utility vehicle, particularly truck
Véhicule utilitaire, en particulier camion

(30) Priorität: 14.07.2004 DE 102004033909
(43) Veröffentlichungstag der Anmeldung: 08.02.2006
(73) Patentinhaber: MAN Nutzfahrzeuge Aktiengesellschaft, 80995 München (DE)
(72) Erfinder: Weissbrodt, Olaf, Dipl.-Ing., 80995 München (DE)

(56) Entgegenhaltungen:
- DE-U1- 29 623 593
- US-A- 4 192 397
- US-A- 5 593 167

## Beschreibung

Die Erfindung bezieht sich auf ein Nutzfahrzeug, insbesondere Lastkraftwagen, mit einem Batteriekasten, der benachbart zu einer Radabdeckung am Fahrgestellrahmen befestigt ist.

Bei Lastkraftwagen ist es bereits bekannt, einen Batteriekasten am Fahrgestellrahmen zu befestigen (DE 196 09 497 C2). Im Bereich dieses Batteriekastens befindet sich eine zur Abdeckung eines Vorderrades des Lkw dienende Radabdeckung. Diese Radabdeckung ist über gesonderte Elemente am Fahrgestell befestigt, die auf eine stabile Halterung der Radabdeckung in allen Fahrsituationen ausgelegt ist.

Der vorliegenden Erfindung liegt die Aufgabe zugrunde, bei einem Nutzfahrzeug der gattungsgemäßen Art solche Konstruktionsänderungen zu schaffen, dass sich eine Reduzierung des Montage- und Herstellungskostenaufwandes erzielen lässt.

Diese Aufgabe wird erfindungsgemäß dadurch gelöst, dass der Batteriekasten auch den Halter für die Radabdeckung bildet und diese mittelbar am Batteriekasten befestigt ist.

Durch diese erfindungsgemäße Konstruktion ergibt sich der Vorteil, dass eine gesonderte, eigenständig auf Tragfunktion ausgerichtete Halterung für die Radabdeckung entfallen kann. Die Tragfunktion wird vom entsprechend ausgebildeten und sicher am Fahrgestellrahmen befestigten Batteriekasten mit übernommen. Die Verbindungselemente zwischen beiden Bauteilen können vergleichsweise günstig hergestellt werden, so dass sich insgesamt gesehen eine nennenswerte Verbilligung der Herstellkosten ergibt. Der Montageaufwand reduziert sich ebenfalls, weil der Batteriekasten und die Radabdeckung über das bzw. die Zwischenelement(e) fernab des Nutzfahrzeugs als modulare Einheit vormontierbar und dann als Ganzes am Nutzfahrzeug anbringbar ist.

In bevorzugter Ausgestaltung der Erfindung ist die Radabdeckung über mindestens ein Zwischenelement mit dem Batteriekasten verbunden. Besitzt der Batteriekasten mindestens eine Seitenwand sowie einen Boden, so kann eine der Seitenwände und/oder der Boden in vorteilhafter Ausgestaltung der Erfindung mit der Radabdeckung über zwei Zwischenelemente verbunden sein. Bezüglich der Gestaltung der Zwischenelemente besteht die Möglichkeit, zwei identisch ausgebildete oder zwei unterschiedlich ausgebildete Zwischenelemente einzusetzen.

Jedes der Zwischenelemente kann in weiterer Ausgestaltung der Erfindung in verschiedene Richtungen abgewinkelte Teilbereiche aufweisen, nämlich mindestens einen ersten, an der Radabdeckung zu befestigenden Flansch, einen Mittelteil und mindestens einen weiteren an der Seitenwand oder am Boden des Batteriekastens zu befestigenden Flansch. Diese Flansche stehen vorzugsweise im rechten Winkel zum Mittelteil.

Im Falle der Ausgestaltung mit zwei unterschiedlich ausgebildeten Elementen kann das eine Zwischenelement einen an der Seitenwand und einen am Boden des Batteriekastens zu befestigenden Flansch aufweisen, wobei diese beiden Flansche vorzugsweise im rechten Winkel zueinander angeordnet sind, aber nicht miteinander verbunden und z.B. durch eine Aussparung voneinander getrennt sind.

Vorzugsweise besitzt die Radabdeckung ein im Wesentlichen vertikales Wandteil, mit dem sie an den Zwischenelementen befestigt und über diese mit einer Seitenwand und/oder dem Boden des Batteriekastens über lösbare Verbindungselemente, vorzugsweise Schrauben-Muttern-Verbindungen, verbunden ist.

Die Erfindung wird nachfolgend anhand eines in der Zeichnung dargestellten Ausführungsbeispiels näher beschrieben. In der Zeichnung zeigen:
Fig. 1 eine Seitenansicht des vorderen Bereichs eines Lkw mit Batteriekasten und Radabdeckung
Fig. 2 eine perspektivische Ansicht des Batteriekastens und der Radabdeckung
Fig. 3 eine Draufsicht auf den vorderen Bereich eines Lkw analog Fig. 1
Fig. 4 eine Seitenansicht des Batteriekastens und der Radabdeckung
Fig. 5 eine Einzeldarstellung eines Zwischenelementes in perspektivischer Ansicht
Fig. 6 eine Seitenansicht des Zwischenelements nach Fig. 5
Fig. 7 eine perspektivische Ansicht eines anderen Zwischenelements
Fig. 8 eine Seitenansicht des Zwischenelements nach Fig. 7.

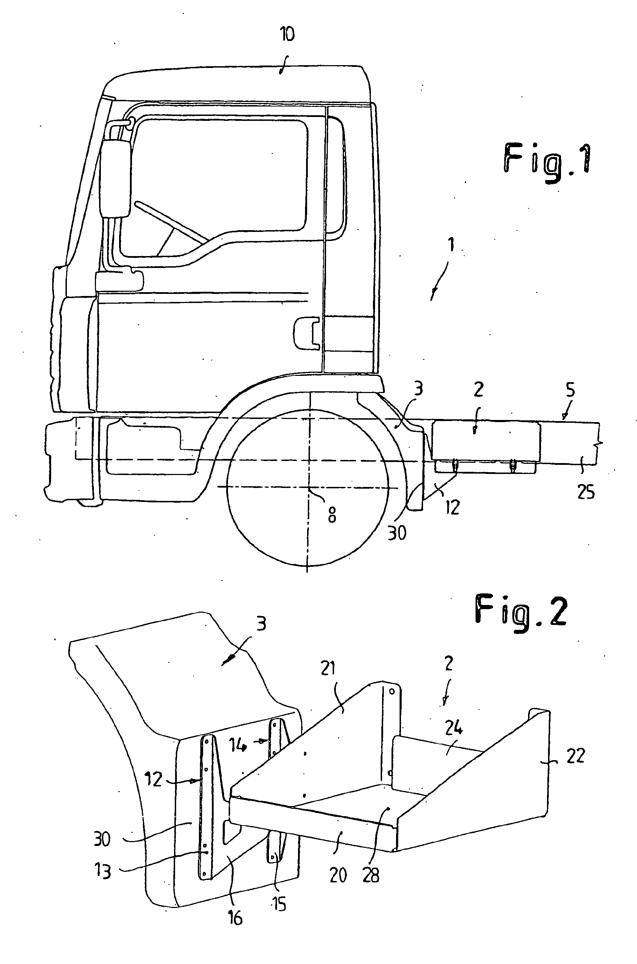

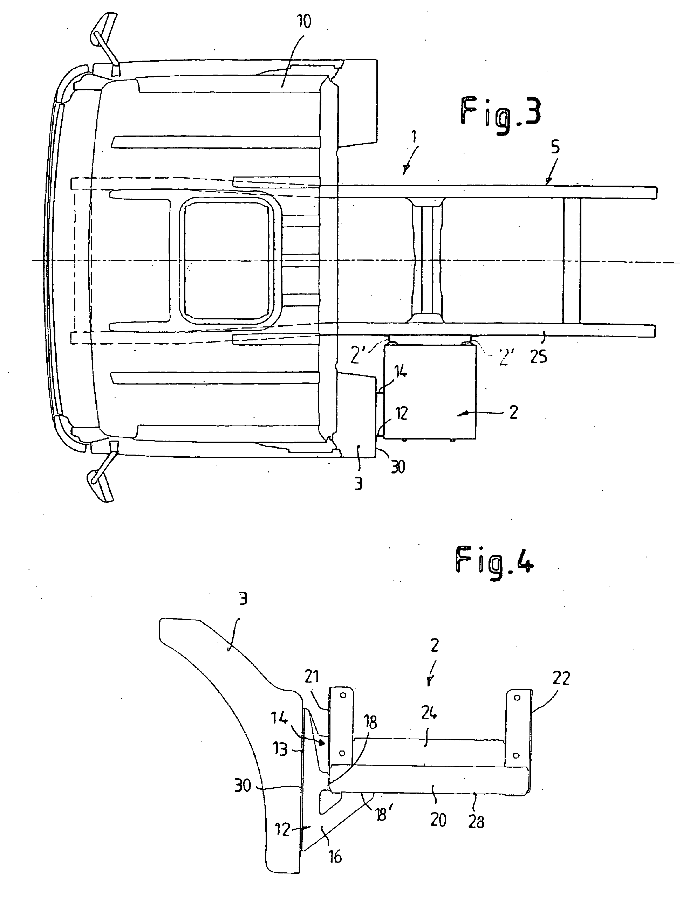

In Fig. 1 und 3 ist der vordere Teil eines Nutzfahrzeuges 1, insbesondere eines Lastkraftwagens dargestellt, mit einem Fahrerhaus 10 und einem Fahrgestellrahmen 5, der aus zwei Rahmen-Längsträgern 25 und mehreren, diese miteinander verbindenden Rahmen-Querträgern besteht.

An einem der Rahmen-Längsträger 25 ist ein nach oben offener oder geschlossener Batteriekasten 2 befestigt, welcher im dargestellten Beispiel eine Außenwand 20, eine vordere Seitenwand 21, eine hintere Seitenwand 22 und eine Innenwand 24 aufweist.

Dieser Batteriekasten 2 ist benachbart zu einer Radabdeckung 3 für ein Rad einer Vorderachse 8 des Lastkraftwagen angeordnet.

Erfindungsgemäß ist der Batteriekasten 2 auch als Halter für die Radabdeckung vorgesehen und entsprechend ausgebildet, außerdem ist die Radabdeckung 3 mittelbar am Batteriekasten 2 befestigt. Hierzu finden beispielsweise zwei Zwischenelemente 12 und 14 Anwendung, wobei diese beiden Zwischenelemente einerseits mit einer der Seitenwände 21, 22 und/oder dem Boden 28 des Batteriekastens 2 und andererseits mit der Radabdeckung 3, dort beispielsweise an einem im Wesentlichen vertikalen Wandteil 30, vorzugsweise über nicht näher dargestellte Schrauben-Muttern-Verbindungen verbunden sind.

Aus Fig. 3 geht die Befestigung des Batteriekastens 2 an einem Rahmen-Längsträger 25 des Fahrgestellrahmens 5 hervor. Dabei ist der Batteriekasten 2 seitlich abragend am Rahmen-Längsträger 25 angeordnet und über massive Halter 2' an letzterem lösbar, z.B. durch Schraubverbindungen, befestigt. Diese Verbindung schafft die Grundlage für eine Befestigung der Radabdeckung 3 über die Zwischenelemente 12 und 14 mit dem Batteriekasten 2.

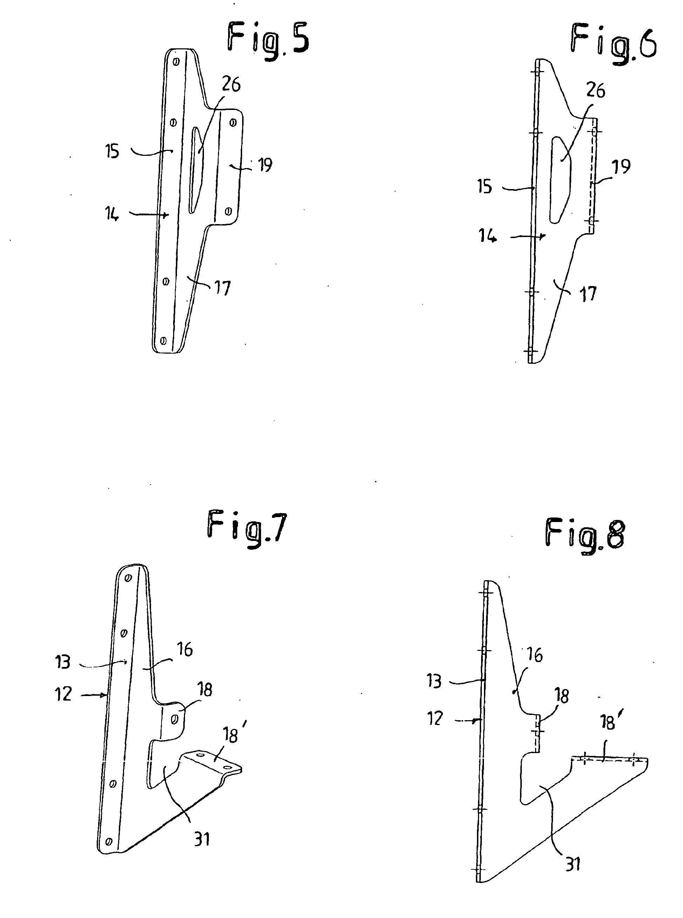

Bei dem bevorzugten Ausführungsbeispiel finden zwei unterschiedlich gestaltete Zwischenelemente 12 und 14 Anwendung. Das eine, in Fig. 7 und 8 näher dargestellte Zwischenelement 12 weist einen Flansch 13 auf, welcher nach Fig. 2 und 4 mit dem Wandteil 30 der Radabdeckung 3 über Schrauben-Muttern-Verbindungen verbunden ist.

An diesen Flansch 13 schließt sich ein demgegenüber abgewinkeltes Mittelteil 16 an, welches in zwei abgewinkelte Flansche 18 und 18' übergeht, die mit der Seitenwand 21 bzw. dem Boden 28 des Batteriekastens 2 über Schrauben-Muttern-Verbindungen verbunden sind.

Wie aus den Figuren 7 und 8 hervorgeht, stehen die beiden Flansche 18 und 18' im rechten Winkel zueinander, das heißt, sie sind entsprechend der Lage der Seitenwand 21 und des Bodens 28 des Batteriekastens 2 jeweils parallel hierzu. Beide Flansche 18 und 18' sind nicht miteinander verbunden, sondern durch eine Ausnehmung 31 voneinander getrennt.

Das andere Zwischenelement 14 ist in Fig. 5 und 6 näher dargestellt. Es weist einen Flansch 15 auf, welcher analog dem Flansch 13 des Zwischenelements 12 an dem Wandteil 30 der Radabdeckung 3 über Schrauben-Muttern-Verbindungen befestigt ist. An den Flansch 15 schließt sich ein demgegenüber abgewinkeltes Mittelteil 17 an, welches in einen abgewinkelten Flansch 19 übergeht, der ebenfalls mit der Seitenwand 21 des Batteriekastens 2 über Schrauben-Muttern-Verbindungen verbunden ist. Das Mittelteil 17 ist mit einer Ausnehmung 26 versehen.

Die beiden Zwischenelemente 12, 14 sind vorzugsweise aus Stahlblech durch Stanz-Biege-Teile realisiert. Denkbar wären aber auch Spritzgussteile, die dann aber anders als die dargestellten Blech-Stanz-Biege-Teile ausgebildet und insbesondere auch nach spritzgusstechnischen und stabilitätsspezifischen Merkmalen gestaltet wären.

Durch die Befestigung der Radabdeckung 3 an dem Batteriekasten 2 über die Zwischenelemente 12 und 14 ergibt sich neben dem Wegfall von besonderen Verbindungselementen zwischen der Radabdeckung und dem Fahrzeugrahmen 5 auch der Vorteil der Möglichkeit, die Radabdeckung mit dem Batteriekasten 2 zu einer Einheit vormontieren zu können, die dann als komplettes Baumodul am Fahrgestellrahmen 5 anbaubar ist.

## Patentansprüche

1. Nutzfahrzeug, insbesondere Lastkraftwagen, mit einem Batteriekasten (2), der benachbart zu einer Radabdeckung (3) am Fahrgestellrahmen (5) befestigt ist,
**dadurch gekennzeichnet,**
**dass** der Batteriekasten (2) auch den Halter für die Radabdeckung (3) bildet und diese mittelbar am Batteriekasten (2) befestigt ist.

2. Nutzfahrzeug nach Anspruch 1, **dadurch gekennzeichnet, dass** die Radabdeckung (3) über mindestens ein Zwischenelement (12, 14) mit dem Batteriekasten (2) verbunden ist.

3. Nutzfahrzeug nach einem der vorhergehenden Ansprüche, wobei der Batteriekasten (2) mindestens eine Seitenwand (21, 22) und einen Boden (28) aufweist, **dadurch gekennzeichnet, dass** die Radabdeckung (3) über zwei Zwischenelemente (12, 14) mit einer Seitenwand (21) und/oder dem Boden (28) des Batteriekastens (2) verbunden ist.

4. Nutzfahrzeug nach Anspruch 3, **gekennzeichnet durch** zwei identisch ausgebildete Zwischenelemente.

5. Nutzfahrzeug nach Anspruch 3, **gekennzeichnet durch** zwei unterschiedlich ausgebildete Zwischenelemente (12, 14).

6. Nutzfahrzeug nach Anspruch 4 oder 5, **dadurch gekennzeichnet, dass** jedes Zwischenelement (12, 14) in verschiedene Richtungen abgewinkelte Teilbereiche aufweist, nämlich mindestens einen ersten, an der Radabdeckung (3) zu befestigenden Flansch (13, 15), ein Mittelteil (16, 17) und mindestens einen zweiten, an der Seitenwand (21) oder am Boden (28) des Batteriekastens (2) zu befestigenden Flansch (18, 18'; 19).

7. Nutzfahrzeug nach Anspruch 6, **dadurch gekennzeichnet, dass** die Flansche (13, 15; 18, 18';19) jedes Zwischenelements (12, 14) jeweils gegenüber dem Mittelteil (16, 17) abgewinkelt sind.

8. Nutzfahrzeug nach Anspruch 6 oder 7, **dadurch gekennzeichnet, dass** die an der Radabdeckung (3) zu befestigenden Flansche (13, 15) der Zwischenelemente (12, 14) großflächiger sind als deren an der Seitenwand (21) und/oder am Boden (28) des Batteriekastens (2) zu befestigende Flansche (18, 18'; 19).

9. Nutzfahrzeug nach einem der Ansprüche 6 bis 8, **dadurch gekennzeichnet, dass** das Mittelteil (16 bzw. 17) mindestens eines Zwischenelements (12, 14) mindestens eine Aussparung (26) aufweist.

10. Nutzfahrzeug nach einem oder mehreren der Ansprüche 5 bis 9, **dadurch gekennzeichnet, dass** das eine Zwischenelement (12) einen an der Seitenwand (21) und einen am Boden (28) des Batteriekastens (2) zu befestigenden Flansch (18, 18') aufweist.

11. Nutzfahrzeug nach Anspruch 10, **dadurch gekennzeichnet, dass** die beiden Flansche (18, 18') des Zwischenelements (12) im rechten Winkel zueinander angeordnet, aber nicht miteinander verbunden sind.

12. Nutzfahrzeug nach Anspruch 11, **dadurch gekennzeichnet, dass** die beiden Flansche (18, 18') des Zwischenelements (12) durch eine Ausnehmung (31) voneinander getrennt sind.

13. Nutzfahrzeug nach einem oder mehreren der vorhergehenden Ansprüche, **dadurch gekennzeichnet, dass** die Radabdeckung (3) über die Zwischenelemente (12, 14) an dem Batteriekasten (2) über lösbare Verbindungselemente befestigt ist.

14. Nutzfahrzeug nach Anspruch 13, **dadurch gekennzeichnet, dass** die Radabdeckung (3) mit einem im Wesentlichen vertikalen Wandteil (30) an den Zwischenelementen (12, 14) angeschlossen und über diese an einer Seitenwand und/oder am Boden (28) des Batteriekastens (2) über Schrauben-Muttern-Verbindungen befestigt ist.

## Claims

1. Commercial vehicle, in particular a truck with a battery compartment (2) fastened adjacent to a wheel cover (3) on the chassis frame (5),
**characterised in that**
the battery compartment (2) doubles as the bracket for the wheel cover (3) which is indirectly fastened to the battery compartment (2).

2. Commercial vehicle according to Claim 1, **characterised in that** the wheel cover (3) is connected with the battery compartment (2) by means of at least one intermediate element (12, 14).

3. Commercial vehicle according to one of the foregoing Claims, whereby the battery compartment (2) features at least one side wall (21, 22) and a bottom (28), **characterised in that** the wheel cover (3) is connected with one side wall (21) and/or the bottom (28) of the battery compartment via two intermediate elements (12, 14).

4. Commercial vehicle according to Claim 3, **characterised by** two identically designed intermediate elements.

5. Commercial vehicle according to Claim 3, **characterised by** two differently designed intermediate elements (12, 14).

6. Commercial vehicle according to Claim 4 or 5, **characterised in that** each intermediate element (12, 14) features angled areas pointing in different directions, namely at least one first flange (13, 15) to be fastened to the wheel cover (3), a centre area (16, 17) and at least a second flange (18, 18'; 19) to be fastened to the side wall (21) or to the bottom (28) of the battery compartment (2).

7. Commercial vehicle according to Claim 6, **characterised in that** the flanges (13, 15; 18, 18'; 19) of each intermediate element (12, 14) are angled in respect of the centre area (16, 17).

8. Commercial vehicle according to Claim 6 or 7, **characterised in that** the flanges (13, 15) of the intermediate elements (12, 14) are to be fastened to the wheel cover (3) and feature a larger area than the flanges (18, 18';19) of said intermediate elements (12, 14), which flanges are to be fastened to the side wall (21) and/or to the bottom (28) of the battery compartment (2).

9. Commercial vehicle according to one of the Claims 6 to 8, **characterised in that** the centre area (16 / 17) of at least one intermediate element (12, 14) features at least one orifice (26).

10. Commercial vehicle according to one or several of the Claims 5 to 9, **characterised in that** the one intermediate element (12) features a flange (18) to be fastened to the side wall (21) and another flange (18') to be fastened to the bottom (28) of the battery compartment (2).

11. Commercial vehicle according to Claim 10, **characterised in that** the two flanges (18, 18') of the intermediate element (12) are arranged at right angles relative to but not connected with each other.

12. Commercial vehicle according to Claim 11, **characterised in that** the two flanges (18, 18') of the intermediate element (12) are separated from each other by a cutout (31).

13. Commercial vehicle according to one or several of the foregoing Claims, **characterised in that** the wheel cover (3) is fastened to the battery compartment (2) via the intermediate elements (12, 14) by means of detachable connecting elements.

14. Commercial vehicle according to Claim 13, **characterised in that** the wheel cover (3) is connected to the intermediate elements (12, 14) with the aid of an essentially vertical wall part (30) and via said intermediate elements (12, 14) to a side wall and/or to the bottom (28) of the battery compartment (2) by means of bolt/nut connections.

## Revendications

1. Véhicule industriel, en particulier un camion poids lourd, avec un coffre à batteries (2), fixé sur le cadre du châssis (5) à proximité d'une jupe d'aile (3),
**caractérisé**
**en ce que** le coffre à batteries (2) forme également le support de la jupe d'aile (3) et cette dernière est fixée indirectement sur le coffre à batteries (2).

2. Véhicule industriel selon la revendication 1, **caractérisé en ce que** la jupe d'aile (3) est reliée au coffre à batteries (2) par au moins un élément intermédiaire (12, 14).

3. Véhicule industriel selon l'une quelconque des revendications mentionnées précédemment, auquel cas le coffre à batteries (2) présente au moins une paroi latérale (21, 22) et un fond (28), **caractérisé en ce que** la jupe d'aile (3) est reliée à une paroi latérale (21) et/ou au fond (28) du coffre à batteries par deux éléments intermédiaires (12, 14).

4. Véhicule industriel selon la revendication 3, **caractérisé par** deux éléments intermédiaires (12, 14) conçus de manière identique.

5. Véhicule industriel selon la revendication 3, **caractérisé par** deux éléments intermédiaires (12, 14) conçus de manière différente.

6. Véhicule industriel selon la revendication 4 ou 5, **caractérisé en ce que** chaque élément intermédiaire (12, 14) présente des parties de pièce pliées en U dans différentes directions, à savoir au moins une première bride (13, 15) à fixer sur la jupe d'aile (3), une pièce médiane (16, 17) et au moins une deuxième bride (18, 18' ; 19) à fixer sur la paroi latérale (21) ou sur le fond (28) du coffre à batteries (2).

7. Véhicule industriel selon la revendication 6, **caractérisé en ce que** les brides (13, 15 ; 18, 18' ; 19) de chaque élément intermédiaire (12, 14) sont pliées en U à chaque fois vis-à-vis de la pièce médiane (16, 17).

8. Véhicule industriel selon la revendication 6 ou 7, **caractérisé en ce que** les brides (13, 15) à fixer sur la jupe d'aile (3) des éléments intermédiaires (12, 14) sont de taille plus importante que les brides (18, 18' ; 19) à fixer sur la paroi latérale (21) et/ou sur le fond (28) du coffre à batteries (2).

9. Véhicule industriel selon les revendications 6 à 8, **caractérisé en ce que** la pièce médiane (16 ou 17) d'au moins un élément intermédiaire (12, 14) présente un évidement (26).

10. Véhicule industriel selon une ou plusieurs des revendications 5 à 9, **caractérisé en ce que** l'élément intermédiaire (12) présente une bride (18, 18') à fixer sur la paroi latérale (21) et une autre à fixer sur le fond (28) du coffre à batteries (2).

11. Véhicule industriel selon la revendication 10, **caractérisé en ce que** les deux brides (18, 18') de l'élément intermédiaire (12) sont disposées à un angle droit l'une par rapport à l'autre, mais pas reliées l'une à l'autre.

12. Véhicule industriel selon la revendication 11, **caractérisé en ce que** les deux brides (18, 18') de l'élément intermédiaire (12) sont séparées l'une par rapport à l'autre par un creux.

13. Véhicule industriel selon une ou plusieurs des revendications mentionnées précédemment, **caractérisé en ce que** la jupe d'aile (3) est fixée au coffre à batteries (2) par des éléments intermédiaires (12, 14) à l'aide d'éléments de liaison démontables.

14. Véhicule industriel selon la revendication 13, **caractérisé en ce que** la jupe d'aile (3) est associée aux éléments intermédiaires (12, 14) au moyen d'une partie de paroi pour l'essentiel verticale (30) et est fixée par celle-ci sur une paroi latérale et/ou sur le fond (28) du coffre à batteries (2) à l'aide de liaisons boulonnées.
